(19) Europäisches Patentamt
European Patent Office
Office européen des brevets

(11) Veröffentlichungsnummer: **0 157 171**
**B1**

(12) **EUROPÄISCHE PATENTSCHRIFT**

(45) Veröffentlichungstag der Patentschrift: **19.09.90**

(51) Int. Cl.[5]: **A 01 N 47/30,** A 01 N 47/36 // (A01N47/30, 43:76),(A01N47/36, 43:76)

(21) Anmeldenummer: **85102132.9**

(22) Anmeldetag: **27.02.85**

(54) **Herbizide Mittel.**

(30) Priorität: **15.03.84 DE 3409432**

(43) Veröffentlichungstag der Anmeldung:
**09.10.85 Patentblatt 85/41**

(45) Bekanntmachung des Hinweises auf die Patenterteilung:
**19.09.90 Patentblatt 90/38**

(84) Benannte Vertragsstaaten:
**BE DE FR GB IT NL**

(56) Entgegenhaltungen:
**EP-A-0 012 717**
**DE-A-3 006 439**

(73) Patentinhaber: **HOECHST AKTIENGESELLSCHAFT**
**Postfach 80 03 20**
**D-6230 Frankfurt am Main 80 (DE)**

(72) Erfinder: **Bauer, Klaus, Dr.**
**Kolpingstrasse 7**
**D-6054 Rodgau (DE)**
Erfinder: **Bieringer, Hermann, Dr.**
**Eichenweg 26**
**D-6239 Eppstein (DE)**
Erfinder: **Schumacher, Hans, Dr.**
**Claudiusstrasse 4**
**D-6093 Flörsheim am Main (DE)**

**Die Akte enthält technische Angaben, die nach dem Eingang der Anmeldung eingereicht wurden und die nicht in dieser Patentschrift enthalten sind.**

**EP 0 157 171 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Herbizide vom Typ der 6-Chlor-Benzoxazolyloxy-phenoxypropionsäure, wie sie aus der DE—A 26 40 730 (US—A 4 130 413) bekannt sind, verfügen im Nachauflaufverfahren über eine gute herbizide Wirksamkeit gegen verschiedene wirtschaftlich wichtige Schadgräser. Sie können aber in Getreide-Nutzkulturen oftmals nicht selektiv eingesetzt werden, weil bleibende Schäden in Gestalt von Wachstumshemmungen oder Halmverkürzungen auftreten können.

Überraschenderweise wurde nun gefunden, daß sich die Verträglichkeit dieser Herbizide wesentlich verbessern läßt, wenn sie in Verbindung mit bekannten Getreideherbiziden auf Harnstoffbasis eingesetzt werden. Bei diesen erfindungsgemäßen Kombinationen wurden ferner unerwartete überadditive Wirkungssteigerungen beobachtet. Aus der DE—A 3006439 sind bereits herbizide Mittel bekannt, die Herbizide des genannten Typs in Kombination mit N-Methoxy-N-methyl-N'-[4-(2-p-Tolylethyloxy)-phenyl]-harnstoff enthalten. Diese herbiziden Mittel weisen jedoch unerwünschte phytotoxische Nebenwirkungen bei Kulturpflanzen auf.

Gegenstand der vorliegenden Erfindung sind daher herbizide Mittel, mit verminderten phytotoxischen Nebenwirkungen gegenüber Kulturpflanzen, dadurch gekennzeichnet, daß sie einen Wirkstoff der Formel (I).

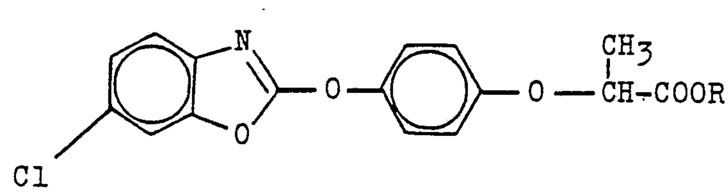

(I)

worin R = ($C_1$—$C_4$)Alkyl bedeutet, in Kombination mit einem Wirkstoff der Formel (II),

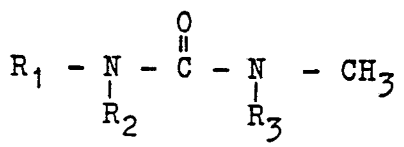

(II)

worin

$R_1$ = Phenyl, das durch ein oder zwei Reste der Gruppe Chlor und ($C_1$—$C_3$)Alkyl substituiert ist, oder Benthiazolyl

$R_2$ = H oder Methyl und

$R_3$ = H, Methyl oder Methoxy bedeuten, enthalten.

Als Verbindung der Formel (I) eignet sich besonders diejenige, bei der R = $C_2H_5$ [Verbindung (Ia) = 2-(4-(6-Chlor-benzoxazolyl-2-oxy)-phenoxy)-propionsäureethylester] bedeutet.

Von den Verbindungen der Formel (II) sind beispielsweise zu nennen Chlortoluron (3-(3-Chlor-4-methylphenyl)-1,1-dimethylharnstoff), Diuron (3-(3,4-Dichlorphenyl)-1,1-dimethylharnstoff), Isoproturon (3-(4-Isopropylphenyl)-1,1-dimethylharnstoff), Methabenzthiazuron (3-(Benzthiazol-2-yl)-1,3-dimethylharnstoff), Monolinuron (3-(4-Chlorphenyl)-1-methoxy-1-methyl-harnstoff), Linuron (3-(3,4-Dichlorphenyl)-1-methoxy-1-methyl-harnstoff) und 3-(3-Chlor-4-ispropyl-phenyl)-1-methoxy-1-methyl-harnstoff. Hiervon sind als bevorzugt die Wirkstoffe Chlortoluron, Isoproturon und Methabenzthiazuron und als besonders bevorzugt Isoproturon zu nennen.

Die erfindungsgemäßen herbiziden Mittel lassen sich vorteilhaft zur selektiven Bekämpfung von Ungräsern und Unkräutern in Getreide, insbesondere in Roggen und Weizen, bevorzugt Weizen einsetzen. Schädigende Wirkungen durch Verbindungen der Formel (I) auf die Kulturpflanzen werden durch den Einfluß der Verbindungen der Formel (II) aufgehoben. Die Verbindungen der Formel (II) besitzen demzufolge eine überraschende Safener- oder Antidotwirkung für die Verbindungen der Formel (I).

Außerdem zeigten sich bei den erfindungsgemäßen Kombinationen überraschende synergistische Wirkungssteigerungen d.h. die beobachteten herbiziden Wirkungen der Mischungen aus (I) und (II) waren intensiver als man aufgrund der Aktivitäten der Einzel-Komponenten erwarten konnte.

Die Anwendung der beiden Wirkstoffe der Formeln (I) und (II) wird zweckmäßigerweise gemeinsam vorgenommen; sie kann jedoch auch getrennt erfolgen. Die erfindungsgemäßen Kombinationen werden in der Regel im Nachauflaufverfahren appliziert.

Gegenstand der vorliegenden Erfindung ist daher auch ein Verfahren zur Bekämpfung von Schadpflanzen im Getreide, dadurch gekennzeichnet, daß man auf die Kulturpflanzen oder die Anbauflächen eine wirksame Menge einer Verbindung der Formel (I) in Kombination mit einer Verbindung der Formel (II) gemeinsam oder aufeinanderfolgend appliziert. Ebenso ist Gegenstand der vorliegenden Erfindung ein Verfahren zum Schutz von Getreidepflanzen gegen phytotoxische Wirkungen von Herbiziden

der Formel (I), dadurch gekennzeichnet, daß man auf die Kulturpflanzen oder die Anbauflächen gemeinsam mit dem Herbizid der Formel (I) oder aufeinanderfolgend eine Verbindung der Formel (II) appliziert.

Das Gräserherbizid der Formel (I) wird in einer Dosierung im Bereich von 0,05 bis 0,3 kg Wirkstoff/ha eingesetzt, während die Harnstoffderivate der Formel (II) mit Dosierungen im Bereich von 0,3 bis 3,0 kg Wirkstoff/ha angewendet werden. Das Verhältnis der Wirkstoffe der Formel (I) zu den Wirkstoffen der Formel (II) kann im Bereich von 1:1 bis 1:60 variieren und liegt vorzugsweise im Bereich von 1:3 bis 1:30.

Die erfindungsgemäßen herbiziden Kombinationen können entweder als Tankmischungen, bei denen die Wirkstoffe erst unmittelbar vor der Applikation miteinander vermischt werden oder als Fertigformulierungen zur Anwendung gebracht werden. Als Fertigformulierungen können sie in Form von benetzbaren Pulvern, emulgierbaren Konzentraten, versprühbaren Lösungen, Stäubemitteln oder Granulaten formuliert sein und enthalten die üblichen Formulierungshilfmittel wie Netz-, Haft-, Dispergiermittel, feste oder flüssige Inertstoffe sowie Mahlhilfsmittel oder Lösungsmittel.

Benetzbare Pulver sind in Wasser gleichmäßig dispergierbare Präparate, die neben dem Wirkstoff außer einem Verdünnungs- oder Inertstoff noch übliche Netzmittel, wie polyoxyethylierte Alkylphenole, Polyvinylalkohol, polyoxyethylierte Oleyl- oder Stearylamine, Alkyl- oder Alkylphenylsulfonate und übliche Dispergiermittel, wie ligninsulfonsaures Natrium, Kalium oder Calcium, 2,2'-dinaphthylmethan-6,6'-disulfonsaures Natrium, oder auch oleoylmethyltaurinsaures Natrium enthalten.

Emulgierbare Konzentrate werden durch Auflösen des Wirkstoffs in einem organischen Lösungsmittel wie Butanol, Cyclohexanon, Dimethylformamid, Xylol oder auch höhersiedenden Aromaten und Zusatz eines nichtionischen Netzmittels, beispielsweise eines polyoxyethylierten Alkylphenols, eines polyoxyethylierten Oleyl- oder Stearylamins oder eines Alkyl- oder Alkylphenylsulfonats, erhalten. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln wie Polyvinylalkohol, polyacrylsaurem Natrium oder auch Mineralölen auf die Oberfläche von Trägerstoffen wie Sand, Kaolinite, oder von granuliertem Inertmaterial.

Die Konzentrationen der Wirkstoffe in den handelsüblichen Formulierungen können verschieden sein. In benetzbaren Pulvern variiert die Gesamtwirkstoffkonzentration zwischen etwa 20% und 90%, der Rest besteht aus den oben angegebenen Formulierungszusätzen. Bei emulgierbaren Konzentraten beträgt die Wirkstoffkonzentration etwa 10% bis 80%.

Zur Anwendung werden die handelsüblichen Konzentrate gegebenenfalls in üblicher Weise verdünnt, z.B. bei benetzbaren Pulvern und emulgierbaren Konzentraten mittels Wasser. Mit den äußeren Bedingungen wie Temperatur, Feuchtigkeit u.a. variiert die erforderliche Aufwandmenge. Sie kann innerhalb weiter Grenzen, insbesondere im Bereich von 0,35 bis 3,5 kg Wirkstoff/ha, schwanken.

Die erfindungsgemäßen Mittel können mit anderen Herbiziden, Insektiziden und Fungiziden kombiniert werden; insbesondere lassen sich in Abhängigkeit vom jeweiligen Unkrautproblem weitere herbizide Wirstoffe zusetzen.

## *A. Formulierungsbeispiele*

### Beispiel 1

Ein in Wasser leicht dispergierbares, benetzbares Pulver wird erhalten, indem man:

4,0 Gew.-Teile Ethyl-2-[4-(6-chlor-benzoxazolyl-2-oxy)-phenoxy]-propanoat [Verbindung (Ia)]
40,0 Gew.-Teile Isoproturon
35,0 Gew.-Teile synthetische Kieselsäure
8,0 Gew.-Teile ligninsulfonsaures Calcium
1,0 Gew.-Teile Arylsulfonat (Na-Salz)
5,0 Gew.-Teile oleoylmethyltaurinsaures Natrium
4,0 Gew.-Teile Polyvinylalkohol
3,0 Gew.-Teile basisches Aluminiumsilikat (Kaolinit)

in einem Trommelmischer gut mischt und anschließend auf einer Stiftmühle bei 3000 Upm zerkleinert. Das anfallende Mahlgut wird erneut gemischt und bei 12000 Upm fein gemahlen.

### Beispiel 2

Ein in Wasser leicht dispergierbares, benetzbares Pulver wird erhalten, indem man:

4,0 Gew.-Teile Verbindung (Ia)
48,0 Gew.-Teile Methabenzthiazuron
30,0 Gew.-Teile synthetische Kieselsäure
7,0 Gew.-Teile ligninsulfonsaures Kalium
5,0 Gew.-Teile Arylsulfonat (Na-Salz)
4,0 Gew.-Teile oleylmethyltaurinsaures Natrium
2,0 Gew.-Teile Polyvinylakohol

in einem Trommelmischer gut mischt und anschließend, wie unter Beispiel 1 beschrieben, zunächst bei 3000 Upm und danach bei 12000 Upm mahlt.

Beispiel 3

Ein in Wasser leicht dispergierbares, benetzbares Pulver wird erhalten, indem man:

3,0 Gew.-Teile Verbindung (Ia)
45,0 Gew.-Teile Methabenzthiazuron
32,0 Gew.-Teile synthetische Kieselsäure
7,0 Gew.-Teile ligninsulfonsaures Kalium
5,0 Gew.-Teile Arylsulfonat (Na-Salz)
4,0 Gew.-Teile oleoylmethyltaurinsaures Natrium
4,0 Gew.-Teile Polyvinylakohol

in einem Trommelmischer gut mischt und anschließend, wie unter Beispiel 1 beschrieben, zunächst bei 3000 Upm und danach bei 12000 Upm mahlt.

Beispiel 4

Ein in Wasser leicht dispergierbares Pulver wird erhalten, indem man:

3,0 Gew.-Teile Verbindung (Ia)
36,0 Gew.-Teile Chlortoluron
25,0 Gew.-Teile synthetische Kieselsäure
15,0 Gew.-Teile basisches Aluminiumsilikat (Kaolinit)
12,0 Gew.-Teile ethoxylierten Triisodecanol
6,0 Gew.-Teile ligninsulfonsaures Kalium
3,0 Gew.-Teile Polyvinylakohol

in einem Trommelmischer gut mischt und anschließend, wie unter Beispiel 1 angegeben, zunächst bei 3000 Upm und danach bei 12000 Upm mahlt.

Beispiel 5

Ein in Wasser leicht dispergierbares Pulver wird erhalten, indem man:

3,0 Gew.-Teile Verbindung (Ia)
45,0 Gew.-Teile Chlortoluron
30,0 Gew.-Teile synthetische Kieselsäure
10,0 Gew.-Teile basische Aluminiumsilikat (Kaolinit)
4,0 Gew.-Teile ligninsulfonsaures Kalium
4,0 Gew.-Teile oleoylmethyltaurinsaures Na
4,0 Gew.-Teile Polyvinylalkohol

in einem Trommelmischer gut mischt und anschließend, wie unter Beispiel 1 angegeben, zunächst bei 3000 Upm und danach bei 12000 Upm mahlt.

Beispiel 6

Ein emulgierbares Konzentrat wird erhalten aus;

3,0 Gew.-Teile Verbindung (Ia)
24,0 Gew.-Teile Monolinuron
40,0 Gew.-Teile Xylol
15,0 Gew.-Teile Cyclohexanon
10,0 Gew.-Teile Fettsäurepolyglykolester
5,5 Gew.-Teile Ca-Salz einer Alkylarylsulfonsäure
2,5 Gew.-Teile Alkylarylpolyglykolether

Zur Herstellung des emulgierbaren Konzentrates werden die zwie Wirkstoffe in den angegebenen Lösungsmittel-Mengen unter leichtem Erwärmen gelöst, und danach unter Rühren die Emulgatoren zugesetzt. Die entstehende weitgehend klare Lösung wird filtriert und anschließend auf ihre Emulsionsqualität untersucht.

*B. Biologische Beispiele*

Die erfindungsgemäßen Kombinationen wurden im Nachauflaufverfahren auf die Kulturpflanzen im 4—6-Blattstadium appliziert. Unter Gewächshausbedingungen wurden die Pflanzen vier Wochen kultiviert. Durch visuelle Bonitur wurden dann die herbiziden Wirkungen ermittelt.

Die Versuchsergebnisse gemäß nachfolgender Tabelle demonstrieren, daß die Verbindung (Ia) in den gegen Ungräser wirksamen Dosierungen bereits deutliche Schäden an Weizen verursacht. Bei Anwendung der erfindungsgemäß Kombinationen wird die Schadwirkung an Weizen aufgehoben, und zudem die herbizide Wirksamkeit gegen die Ungräser synergistisch gesteigert. Die erfindungsgemäßen Kombinationen sind also vorzüglich geeignet, grasartige und dikotyle Unkräuter im Nachauflaufverfahren in Getreidekulturen selektiv zu bekämpfen.

Der Nachweis des Synergismus ergibt sich aus dem Vergleich des aus den Wirkungen der Einzelkomponenten errechneten additiven Wirkungsgrads mit dem experimentell gefundenen Wirkungsgrad der Wirkstoffkombinationen. Die Errechnung des additiven Wirkungsgrades erfolgt nach der Formel von S.R. Colby (vgl. Calculating synergistic and antagonistic responses of herbizide combinations, Weeds, *15,* 1967, S. 20 bis 22).

Diese Formel lautet:

$$E = X + Y - \frac{X \cdot Y}{100}$$

wobei
X = % Schädigung durch Herbizid (I) bei x kg/ha Aufwandmenge,
Y = % Schädigung durch Herbizid (II) bei y kg/ha Aufwandmenge,
E = (%) die erwartete Schädigung der Herbizide (I) + (II) bei x + y kg/ha Aufwandmenge bedeuten.

Ist die tatsächliche Schädigung größer als berechnet, so ist die Wirkung der Wirkstoffkombination mehr als additiv, d.h., es liegt ein synergistischer Effekt vor. Dies wird anhand der biologischen Beispiele der nachfolgenden Tabelle demonstriert, wobei in der rechten Spalte bei den Ergebnissen der Kombinationsbehandlungen in Klammern die aus obiger Formel errechneten additiven Wirkungen angegeben sind.

<u>Tabelle:</u>

Herbizide Wirksamkeit und Selektivität im Nachlaufverfahren (Wirkung in %)

| Wirkstoff | Dosis kg AS/ha | TA | AVF | ALM | STM |
|---|---|---|---|---|---|
| (Ia) | 0.2 | 30 | 95 | 100 | 15 |
| | 0.1 | 10 | 80 | 90 | 5 |
| | 0.050 | 0 | 60 | 65 | 0 |
| | 0.025 | 0 | 40 | 10 | 0 |
| Chlortoluron | 0.5 | 0 | 40 | 65 | 85 |
| Isoproturon | 0.40 | 0 | 50 | 60 | 95 |
| Methabenzthiazuron | 0.75 | 0 | 75 | 60 | 100 |
| (Ia) + Chlorotoluron | 0.2 + 0.5 | 5 | 100 | 100 | 95 |
| | 0.1 + 0.5 | 0 | 100(88) | 100 | 90 |
| | 0.050 + 0.5 | 0 | 97(76) | 95(88) | 95 |
| | 0.025 + 0.5 | 0 | 90(74) | 85(68,5) | 90 |
| (Ia) + Isoproturon | 0.2 + 0.38 | 0 | 100 | 100 | 98 |
| | 0.1 + 0.38 | 0 | 100(90) | 99 | 95 |
| | 0.050 + 0.38 | 0 | 95(80) | 92(84) | 95 |
| | 0.025 + 0.38 | 0 | 85(70) | 75(69) | 95 |
| (Ia) + Methabenzthiazuron | 0.2 + 0.75 | 2 | 100 | 100 | 100 |
| | 0.1 + 0.75 | 0 | 100 | 100 | 100 |
| | 0.050 + 0.75 | 0 | 92 | 97(89) | 100 |
| | 0.025 + 0.75 | 0 | 80 | 85(64) | 100 |

(Ia) = 2-[4-(6-Chlor-benzoxazolyl-2-oxy)-phenoxy]-propionsäureethylester
TA = Weizen
ALM = Alopecurus moysuroides
AVF = Avena fatua
STM = Stellaria media

**Patentansprüche:**

1. Herbizide Mittel mit verminderten phytotoxischen Nebenwirkungen gegenüber kulturpflanzen, dadurch gekennzeichnet, daß sie einen Wirkstoff der Formel (I),

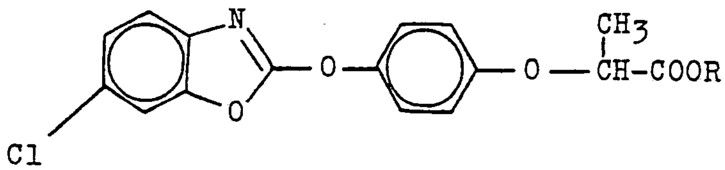

(I)

worin R = ($C_1$—$C_4$)Alkyl bedeutet, in Kombination mit einem Wirkstoff der Formel (II),

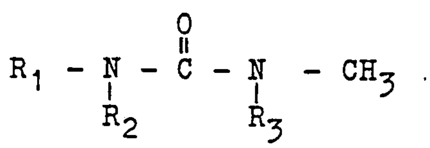

(II)

worin

$R_1$ = Phenyl, das durch ein oder zwei Reste der Gruppe Chlor und ($C_1$—$C_3$)Alkyl substituiert ist, oder Benzthiazolyl

$R_2$ = H oder Methyl und

$R_3$ = H, Methyl oder Methoxy bedeuten, enthalten.

2. Herbizide Mittel gemäß Anspruch 1, dadurch gekennzeichnet, daß der Rest R in Formel (I) Ethyl bedeutet.

3. Herbizide Mittel gemäß Ansprüchen 1 oder 2, dadurch gekennzeichnet, daß sie als Verbindungen der Formel (II) die Wirkstoffe Chlortoluron [3-(3-Chlor-4-methylphenyl)-1,1-dimethylharnstoff], Diuron [3-(3,4-Dichlorphenyl)-1,1-dimethylharnstoff], Isoproturon [3-(4-Isopropylphenyl)-1,1-dimethylharnstoff], Methabenzthiazuron [3-(Benzthiazol-2-yl)-1,3-dimethylharnstoff], Monolinuron [3-(4-Chlorphenyl)-1-methoxy-1-methyl-harnstoff), Linuron [3-(3,4-Dichlorphenyl)-1-methoxy-1-methyl-harnstoff] und 3-(3-Chlor-4-isopropyl-phenyl)-1-methoxy-1-methyl-harnstoff enthalten.

4. Herbizide Mittel gemäß einem oder mehreren der Ansprüche 1 bis 3, dadurch gekennzeichnet, daß sie als Wirkstoffe der Formel (II) Chlortoluron, Isoproturon oder Methabenzthiazuron enthalten.

5. Herbizide Mittel gemäß einem oder mehreren der Ansprüche 1 bis 4, dadurch gekennzeichnet, daß das Mischungsverhältnis der Verbindung der Formel (I) zu den Verbindungen der Formel (II) im Bereich zwischen 1:1 und 1:60 variiert.

6. Herbizide Mittel gemäß einem oder mehreren der Ansprüche 1 bis 5, dadurch gekennzeichnet, daß das Mischungsverhältnis (I):(II) im Bereich von 1:1 bis 1:30 variiert.

7. Verfahren zum Schutz von Getreidepflanzen gegen phytotoxische Wirkungen von Herbiziden der Formel (I), dadurch gekennzeichnet, daß man auf die Kulturpflanzen oder die Anbauflächen gemeinsam mit dem Herbizid der Formel (I) oder aufeinanderfolgend eine Verbindung der Formel (II), jeweils in der Bedeutung gemäß Anspruch 1, appliziert.

8. Verwendung von Verbindung der Formel (II) zur Verminderung der Phytotoxizität von Herbiziden der Formel (I), jeweils in der Bedeutung gemäß Anspruch 1.

**Revendications**

1. Produits herbicides ayant des effets secondaires phytotoxiques amoindris sur les plantes de culture, produits caractérisés en ce qu'ils renferment une matière active de formule (I):

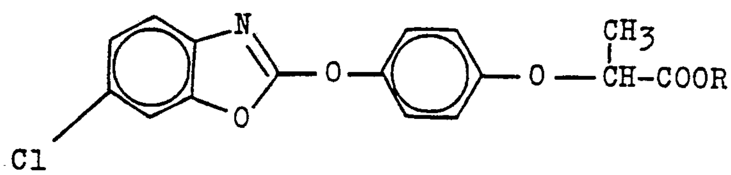

(I)

dans laquelle R représente un alkyle en $C_1$—$C_4$, en combinaison avec une matière active de formule (II):

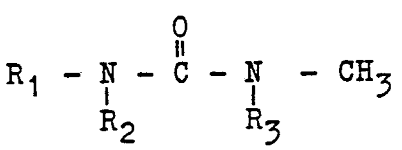

(II)

dans laquelle

$R_1$ représente un phényle qui porte un ou deux substituants pris dans l'ensemble constitué par le chlore et les alkyles en $C_1$—$C_3$, ou représente un benzothiazolyle,

$R_2$ représente H ou un méthyle et

$R_3$ représente H, un méthyle ou un méthoxy.

2. Produits herbicides selon la revendication 1 caractérisés en ce que le symbole R dans la formule (I) représente le radical éthyle.

3. Produits herbicides selon l'une des revendications 1 et 2 caractérisés en ce qu'ils contiennent comme composés de formule (II) les matières actives suivantes: chlortoluron [3-(3-chloro-4-méthyl-phényl)-1,1-diméthylurée], diuron [3-(3,4-dichlorophényl)-1,1-diméthylurée], isoproturon [3-(4-isopropyl-phényl)-1,1-diméthylurée], méthabenzthiazuron [3-(benzothiazol-2-yl)-1,3-diméthylurée], monolinuron [3-(4-chlorophényl)-1-méthoxy-1-méthyl-urée], linuron [3-(3,4-dichlorophényl)-1-méthoxy-1-méthyl-urée] et 3-(3-chloro-4-isopropyl-phényl)1-1méthoxy-1-méthyl-urée.

4. Produits herbicides selon une ou plusieurs des revendications 1 à 3 caractérisés en ce qu'ils contiennent, comme matières actives de la formule (II), du chlortoluron, de l'isoproturon ou du méthabenzthiazuron.

5. Produits herbicides selon une ou plusieurs des revendications 1 à 4 caractérisés en ce que le rapport de mélange du composé de formule (I) aux composés de formule (II) varie dans le domaine compris entre 1:1 et 1:60.

6. Produit herbicides selon une ou plusieurs des revendications 1 à 5 caractérisés en ce que le rapport de mélange (I):(II) varie dans le domaine de 1:1 à 1:30.

7. Procédé pour protéger des plantes céréalières contre des actions phytotoxiques d'herbicides de formule (I), procédé caractérisé en ce que l'on applique sur les plantes de culture ou les terres arables, avec l'herbicide de formule (I), simultanément ou successivement, un composé de formule (II), formules qui sont l'une et l'autre définies à la revendication 1.

8. Utilisation de composés de formule (II) pour diminuer la phytotoxicité d'herbicides de formule (I), formules qui sont définies chacune à la revendication 1.

**Claims**

1. A herbicidal agent having reduced phytotoxic side effects on crop plants, characterized in that the agent contains an active substance of the formula (I)

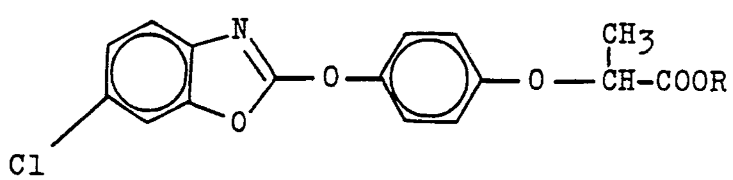

(I)

in which R denotes ($C_1$—$C_4$)-alkyl, in combination with an active substance of the formula (II)

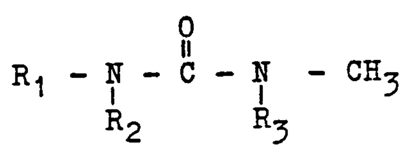

(II)

in which

$R_1$ denotes phenyl, which is substituted by one or two radicals from the group comprising chlorine and ($C_1$—$C_3$)-alkyl, or denotes benzothiazolyl,

$R_2$ denotes H or methyl and

$R_3$ denotes H, methyl or methoxy.

2. A herbicidal agent as claimed in claim 1, characterized in that the radical R in formula (I) denotes ethyl.

3. A herbicidal agent as claimed in either of claims 1 or 2, characterized by containing, as the compound of the formula (II), the active substance chlortoluron [3-(3-chloro-4-methylphenyl)-1,1-dimethyl-urea], diuron [3-(3,4-dichlorophenyl)-1,1-dimethylurea], isoproturon [3-(4-isopropylphenyl)-1-1-dimethyl-urea], methabenzthiazuron [3-(benzothiazol-2-yl)-1,3-dimethylurea], monolinuron [3-(4-chlorophenyl)-1-methoxy-1-methyl-urea], linuron [3-(3,4-dichlorophenyl)-1-methoxy-1-methyl-urea], or 3-(3-chloro-4-isopropyl-phenyl)-1-methoxy-1-methyl-urea.

4. A herbicidal agent as claimed in one or more of claims 1 to 3, characterized by containing, as the active substance of the formula (II), chlortoluron, isoproturon or methabenzthiazuron.

5. A herbicidal agent as claimed in one or more of claims 1 to 4, characterized by the mixing ratio of the compound of the formula (I) to the compounds of the formula (II) varies within the range between 1:1 and 1:60.

6. A herbicidal agent as claimed in one or more of claims 1 to 5, characterized by the mixing ratio of (I):(II) varies within the range from 1:1 to 1:30.

7. A method of protecting cereal plants from the phytotoxic effects of a herbicide of the formula (I), characterized by applying a compound of the formula (II), together with the herbicide of the formula (I), together with the herbicide of the formula (I) or successively, in each case within the meaning of claim 1, to the crop plants or the areas under cultivation.

8. The use of a compound of the formula (II) for reducing the phytotoxicity of a herbicide of the formula (I), in each case within the meaning of claim 1.